# EUROPÄISCHE PATENTSCHRIFT

(11) **EP 1 892 185 B1**
(45) Veröffentlichungstag und Bekanntmachung des Hinweises auf die Patenterteilung: **13.04.2011**
(21) Anmeldenummer: 07009748.0
(22) Anmeldetag: 16.05.2007
(51) Int. Cl.: B64D 11/06

(54) **Strukturrahmen**
Structural frame
Cadre de structure

(30) Priorität: 26.08.2006 DE 102006040059
(43) Veröffentlichungstag der Anmeldung: 27.02.2008
(73) Patentinhaber: Recaro Aircraft Seating GmbH & Co. KG, 74523 Schwäbisch Hall (DE)
(72) Erfinder: Bauer, Jürgen, 71560 Sulzbach (DE)
(74) Vertreter: Daub, Thomas

(56) Entgegenhaltungen:
- WO-A-02/066284
- WO-A-2005/035301
- WO-A-2006/029659
- WO-A-2006/074522
- DE-A1-102004 019 299
- US-A- 4 625 934
- US-A- 4 834 452
- US-A1- 2003 189 370

## Beschreibung

Die Erfindung betrifft einen Strukturrahmen zum Aufständern von Sitzen auf einem Kabinenboden und/oder zum Transport dahingehender Sitze in und aus einer Kabine.

Moderne Fluggastsitze, wie sie beispielhaft in der DE 100 19 484 A1 aufgezeigt sind, erlauben eine Vielzahl von Bewegungsmöglichkeiten und damit einhergehende Freiheitsgrade für die einzelnen Sitzkomponenten, wie einem Sitzteil, einer Rückenlehne sowie einer zuordenbaren Bein- und Fußauflage. Die bekannte Lösung zeichnet sich unter anderem dadurch aus, dass das eigentliche Sitzteil über ein Stabtragwerk auf dem Kabinenboden eines Flugzeuges aufständerbar ist, wobei das Stabtragwerk über eine Vielzahl von Gelenkstellen verfügt, die die einzelnen Stäbe des Tragwerkes gelenkig und mithin schwenkbar miteinander verbinden, so dass es über eine geeignete Steuer- und Einstelleinrichtung möglich ist, den Gesamtsitz mit einer Vielzahl an Einzelpositionen einzustellen, beispielsweise den Sitz von einer aufrechten Position in eine Bettposition und umgekehrt je nach den Bedürfnissen des Sitzbenutzers und gemäß vorgegebener Sicherheitskriterien zu verfahren. Zur Sicherung der Individualsphäre sind dahingehende Fluggastsitze häufig mit einer sog. Umhausung (Shell) umgeben, die darüber hinaus auch sicherstellt, dass nicht ungewollt Körperteile oder Gegenstände in die Mechanik des Stabtragwerkes gelangen können.

Zum Festlegen dahingehender Fluggastsitze dienen Sitzbefestigungsvorrichtungen, die man fachsprachlich auch mit "Fitting" bezeichnet. Diese dienen dazu, die einander gegenüberliegenden unteren Beinpaare an Längsholmen des Stabtragwerkes eines Sitzes an Befestigungsschienen festzulegen, die regelmäßig in den Kabinenboden eingelassen und in der Art eines Hohlprofiles ausgebildet sind, das jeweils an seiner dem Fluggastsitz zugewandten Oberseite mit einem von den freien Profilflanken des Hohlprofils begrenzten Längskanal versehen ist, der in einem vorgebbaren Rastermaß seinen freien Eintrittsquerschnitt verbreiternde Durchtrittsöffnungen aufweist, die dem Durchgriff eines Rastteils eines Verriegelungskörpers dienen, der bei einer Relativbewegung des jeweiligen Rastteils quer zur Längsachse der Befestigungsschiene in klemmende Anlage bringbar ist mit den Profilflanken des Hohlprofils. In besonders vorteilhafter Weise setzt hierfür die Lösung nach der DE 10 2004 047 455 A1 einen Exzenterverriegelungstrieb ein.

Ferner offenbart die Druckschrift US 4,834,452 eine Anordnung mit zwei Sitzen. Der erste Sitz ist auf einem zugeordneten Grundrahmen aufgeständert. Der zweite Sitz ist auf einem zweiten zugeordneten Grundrahmen durch eine Aufständerstruktur verschiebbar angeordnet. Beide Grundrahmen sind starr miteinander verbunden.

Bei dem dahingehenden modularen Aufstellkonzept ist jeder einzelne Sitz gegebenenfalls mit seinem zuordenbaren Umhausungsteil längs der Befestigungsschienen auf den Kabinenboden aufzuständern und dort mittels den beispielhaft beschriebenen Sitzbefestigungsvorrichtungen festzulegen. Soll die Kabine zu Frachtzwecken umgebaut werden, also die eingebrachten Sitze wieder aus der Kabine entfernt werden oder sind einzelne Sitze wegen etwaiger Fehlfunktionen oder abgenutzten Sitzteilen zu tauschen, ist insoweit jeder einzelne Fluggastsitz zu handhaben, was mit einem entsprechenden Montageaufwand einhergeht, der Zeit benötigt und mithin Kosten generiert, insbesondere wenn man berücksichtigt, dass abgestellte Flugzeuge nichts zum Ertrag mit beitragen können. Auch sind die bekannten Fluggastsitzlösungen von ihrer Grundstruktur, beispielsweise vom Stabtragwerk her gesehen, so auszugestalten, dass sie auch erhöhten Sicherheitsanforderungen gerecht werden, beispielsweise einen 16g-Crash-Test überstehen oder bei im Flug auftretenden Verwindungen der Kabine in Längsrichtung des Flugzeuges (Pitch und Roll - Verhalten) von ihrer Stabilität her nicht beinträchtigt werden. Sofern man jeden einzelnen Fluggastsitz nach diesen Kriterien auszulegen hat, ist ein entsprechend hoher Materialeinsatz not wendig, was zu erhöhten Einsatzgewichten führt und mithin zu einer Reduzierung der geldbringenden Nutzlast eines Flugzeuges.

Ausgehend von diesem Stand der Technik liegt der Erfindung die objektive technische Aufgabe zugrunde, einen gattungsgcmäßen Strukturrahmen bereitzustellen, bei welchem eine Aussteifung einer auf dem Strukturrahmen aufgeständerten Sitzanordnung erreicht werden kann und dennoch für die Sitzanordnung nachteilige Effekte von externen Kräften, die einen Boden belasten, in welchem der Strukturrahmen gehaltert ist, vermindert werden können.

Der erfindungsgemäße Strukturrahmen, der zum Aufständern von Sitzen auf einem Kabinenboden und/oder zum Transport dahingehender Sitze in und aus einer Kabine dient, weist einen ersten Grundrahmen auf, welcher einem ersten Sitz zugeordnet ist, und zumindest einen zweiten Grundrahmen auf, welcher einem zweiten Sitz zugeordnet ist, gekennzeichnet durch ein Verbindungsteil zum Verbinden der Grundrahmen miteinander, das eine Gelenkstelle ausbildet. Dergestalt lässt sich der Sitz als Baueinheit zusammen mit dem Grundrahmen leicht handhaben, insbesondere in einem Aufrüstvorgang eine Flugzeugkabine leicht bestuhlen, aber auch dergestalt wieder abschlagen, indem man die Sitze aus der Kabine entfernt, beispielsweise weil diese zu Fracht-Transportzwecken benötigt wird. Besonders kurze Umrüstzeiten ergeben sich, sofern vorzugsweise zumindest ein Teil der Grundrahmen über Befestigungsmittel mit im oder auf dem Kabinenboden verlaufenden Längsschienen verbindbar ist. Ebenso besteht die Möglichkeit, wie im Stand der Technik bereits aufgezeigt, nachträglich die Sitze über die Sitzbefestigungsvorrichtungen aber nunmehr unter Zwischenschaltung des jeweiligen Grundrahmens mit dem Kabinenboden zu verbinden.

In einer weiteren Ausgestaltung ist das Verbindungsteil für die Schwenkbewegung entlang der jeweiligen Verbindungsachse vorgesehen, wodurch auf den Strukturrahmen einwirkende Kräfte auf besonders einfache Weise abgeleitet werden.

Ferner wird vorgeschlagen, dass das jeweilige Verbindungsteil aus einem Verbindungsbolzen gebildet ist, der in zwei deckungsgleich hintereinander angeordnete Öffnungen zweier benachbarter Grundrahmen reversibel einschiebbar ist, wodurch das Verbindungsteil besonders einfach und günstig hergestellt werden kann.

Der jeweilige Grundrahmen trägt wesentlich zur Stabilität des Sitzes mit bei und wird, wie im Stand der Technik aufgezeigt, zur Bewegung der Sitzkomponenten ein bewegbares Stabtragwerk eingesetzt, bildet der jeweilige Grundrahmen eine Aussteifung für das Stabtragwerk, so dass insoweit auch bei reduziertem Materialeinsatz für die tragenden Teile des Sitzes diese ohne weiteres dem bereits angesprochenen 16g-Test standhalten können. Auch hat es sich gezeigt, dass bei einer möglichen Verwindung der Kabine in Längsrichtung während des Fluges der Grundrahmen die dahingehenden Verwindungskräfte zumindest partiell aufnimmt und insoweit die eigentliche Tragstruktur des Sitzes entlastet. Der erfindungsgemäße Sitz erfüllt mithin die einschlägigen Sicherheitskriterien, auch wenn dieser in Leichtbauweise ausgelegt ist. Da der Grundrahmen als standardisiertes Modul ausgelegt sein kann, lässt er sich kostengünstig insbesondere in hoher Stückzahl herstellen. Zusammen mit dem Gesamtsitz einschließlich einer etwaig vorgesehenen Umhausung (Shell) entsteht dergestalt ein gut handhabbares Sitzsystem, das im Sinne eines modularen Baukästenkonzepts das Aufstellen oder Abschlagen der Komplettbestuhlung einer Flugzeugkabine deutlich erleichtern hilft.

Die Verwendung des jeweiligen Grundrahmens als Strukturrahmen braucht auf einen Einsatz bei Flugzeugkabinen nicht eingeschränkt zu sein, sondern ein entsprechendes Rahmenkonzept könnte auch für Fahrzeuge, insbesondere Reisebusse, Fährschiffe od. dgl., zur Anwendung kommen; dem Grunde nach sich aber auch für die Bestuhlung von Großsälen, wie beispielsweise Vorführsälen od. dgl. eignen.

Bei einer bevorzugten Ausführungsform des erfindungsgemäßen Strukturrahmens ist zur Bildung einer Sitzreihe der erste Grundrahmen mit mindestens dem benachbart angeordneten zweiten Grundrahmen über eine als Verbindungsteil ausgebildete Verbindungsstelle lösbar verbunden. Vorzugsweise ist dabei ferner vorgesehen, dass die Gelenkstelle eine Relativbewegung der benachbart miteinander verbundenen Grundrahmen in mindestens einer Richtung erlaubt, wobei die Relativbewegung aus einer Schwenkbewegung in Richtung um die gemeinsame Verbindungsachse der Grundrahmen besteht. Dergestalt ist es möglich, zur Einleitung von Querkräften, also weitgehend quer zur genannten Längsachse auftretend, unter Bildung eines Gesamt-Strukturrahmens die einzelnen Rahmenteile miteinander zu verbinden, und den insoweit auftretenden Verwindungskräften wirksam zu begegnen, wobei dann ein Grundrahmen relativ gesehen in Längsrichtung zu dem anderen Grundrahmen schwenkbar angeordnet ist.

Ist in einer bevorzugten Ausführungsform des erfindungsgemäßen Strukturrahmens die jeweilige Gelenkstelle mittels einer Arretiervorrichtung zumindest teilweise blockierbar, ist es insoweit möglich, in einer arretierten Grundstellung den Strukturrahmen, bestehend aus mindestens zwei Grundrahmen, bevorzugt zusammen mit den zuordenbaren Sitzen als Transporteinheit zu handhaben und erst in der aufgerüsteten Benutzungssituation innerhalb der Kabine unter Lösen der Arretierung den gewünschten Freiheitsgrad für den Flug herzustellen.

In einer weiteren Ausgestaltung wird vorgeschlagen, dass zumindest ein Teil der aus einer zuordenbaren Verbindungsstelle entfernbaren Verbindungsteile an anderer Stelle als Arretiereinrichtung ein Verriegeln benachbarter Grundrahmen ermöglicht, wodurch eine konstruktiv besonders einfache Bauweise erreicht werden kann.

Bei einer weiteren besonders bevorzugten Ausführungsform des erfindungsgemäßen Strukturrahmens sind die Grundrahmen in der Art eines Rechtecks aus paarweise gegenüberliegenden Längs- und Querholmen aufgebaut, wobei jeder Querholm mit einem Querholm eines benachbarten Grundrahmens die mögliche Verbindungsstelle bildet. Der dahingehende Aufbau über Längs- und Querholme erlaubt in hohem Maße eine Aussteifung für die Gesamtkonstruktion des derart auf dem Grundrahmen stehenden Sitzes.

Ferner wird eine Sitzreihe mit zumindest zwei Sitzen und einem Strukturrahmen vorgeschlagen, wobei die Sitze jeweils einem der Grundrahmen zugeordnet sind, die Sitze jeweils ein Sitzteil und ein Aufständerteil aufweisen, das zum Aufständern des zuordnenbaren Sitzteiles dient, und wobei die Grundrahmen jeweils als Rahmenaussteifung an der Unterseite des zuordenbaren Aufständerteils für den entsprechenden Sitz dienen, wodurch die Sitzreihe besonders effektiv gegen quer zur Längsrichtung der Kabine auftretende Kräfte bestehen kann.

In einer weiteren Ausgestaltung wird eine Sitzreihe mit zumindest zwei Sitzen und einem Strukturrahmen vorgeschlagen, wobei die Sitze jeweils einem der Grundrahmen zugeordnet sind und mindestens einer der Sitze zusammen mit dem zuordenbaren Grundrahmen eine Baueinheit bildet, die sich als Transporteinheit handhaben lässt, wodurch Umrüstzeiten vorteilhaft verkürzt werden können.

Des Weiteren wird eine Sitzreihe mit zumindest zwei Sitzen und einem Strukturrahmen vorgeschlagen, wobei zumindest zwei Grundrahmen in einer arretierten Grundstellung zusammen mit den zuordenbaren Sitzen eine Transporteinheit bilden, die sich zu Transportzwecken handhaben lässt, wodurch ein Transport der Sitzreihe wesentlich erleichtert werden kann.

Weitere vorteilhafte Ausführungsformen des erfindungsgemäßen Strukturrahmens sind Gegenstand der sonstigen Unteransprüche.

Im Folgenden ist der erfindungsgemäße Strukturrahmen anhand eines Ausführungsbeispiels nach der Zeichnung näher erläutert. Dabei zeigen in prinzipieller und nicht maßstäblicher Darstellung die
- Fig. 1: eine perspektivische Draufsicht auf einen Teil einer auf einem ausschnittweise dargestellten Kabinenboden aufgeständerte Dreiersitzreihe;
- Fig. 2 bis 7: die einzelnen Grundrahmen in perspektivischer Draufsicht sowie in stirnseitiger Vorderansicht, die in Einbaurichtung ge- zeigt, nach sinnfälliger Verbindung den Strukturrahmen nach den Fig. 8 und 9 ausbilden, für eine Dreiersitzreihe gemäß der Darstellung nach der Fig. 1;
- Fig. 8 und 9: einen den Fig. 2 bis 7 entsprechende Darstellung in perspek- tivischer Draufsicht sowie in stirnseitiger Vorderansicht für den gesamten Strukturrahmen;
- Fig. 10: eine exemplarische Ansicht auf einen Verbindungsbolzen für die aufgezeigten Grundrahmen.

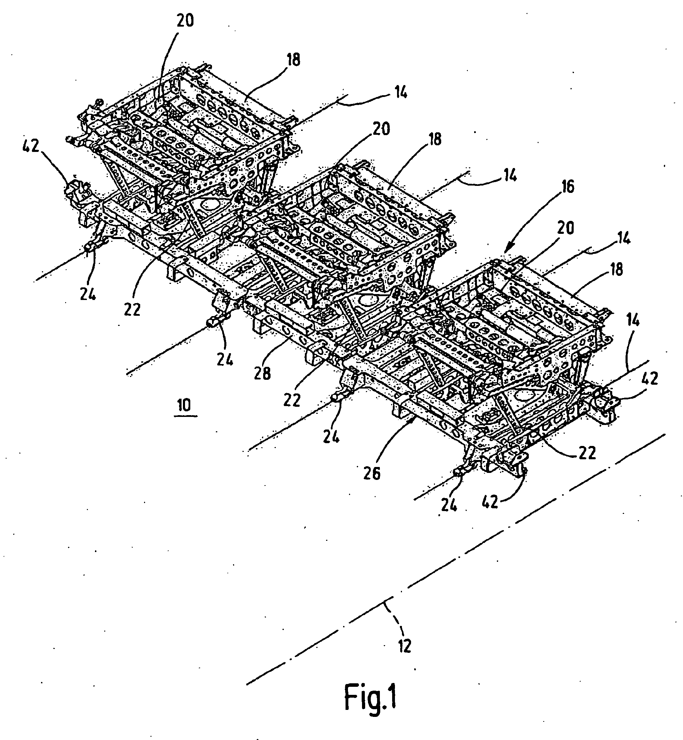

In der perspektivischen Ansicht nach der Fig. 1 ist mit 10 ein Kabinenboden einer nicht näher dargestellten Flugzeugkabine bezeichnet. In den Kabinenboden 10 sind parallel zur Flugzeuglängsachse 12 Befestigungsschienen 14 mit planer Oberseite eingelassen. Über die dahingehenden Befestigungsschienen 14 ist eine als Ganzes mit 16 bezeichnete Bestuhlung festlegbar, bestehend aus drei in Querrichtung nebeneinander angeordneten Fluggastsitzen 18, von denen der einfacheren Darstellung wegen, nur das Sitzteil 20 jeweils dargestellt ist, zusammen mit einem jeweils an der Unterseite angeordneten Stabtragwerk 22, mit jeweils vier diametral einander gegenüberliegenden Ständerbeinen des Tragwerkes, mittels deren das zuordenbare Sitzteil 20 aufständerbar ist, wobei das Stabtragwerk unter Einsatz entsprechender Aktuatoren bewegbar eine Vielzahl an Einstellmöglichkeiten für den gesamten Fluggastsitz (nicht dargestellt) ermöglicht. Sowohl Rückenlehne als auch Fuß- und/oder Beinauflage nebst den Armlehnen und einer möglichen Umhausung (Shell) für den jeweiligen Fluggastsitz . 18 wurden weggelassen, wobei der jeweilige Fluggastsitz 18 um die dahingehenden Komponenten vervollständigbar ist. Auch Polster für das Sitzteil 20 sind nicht gezeigt

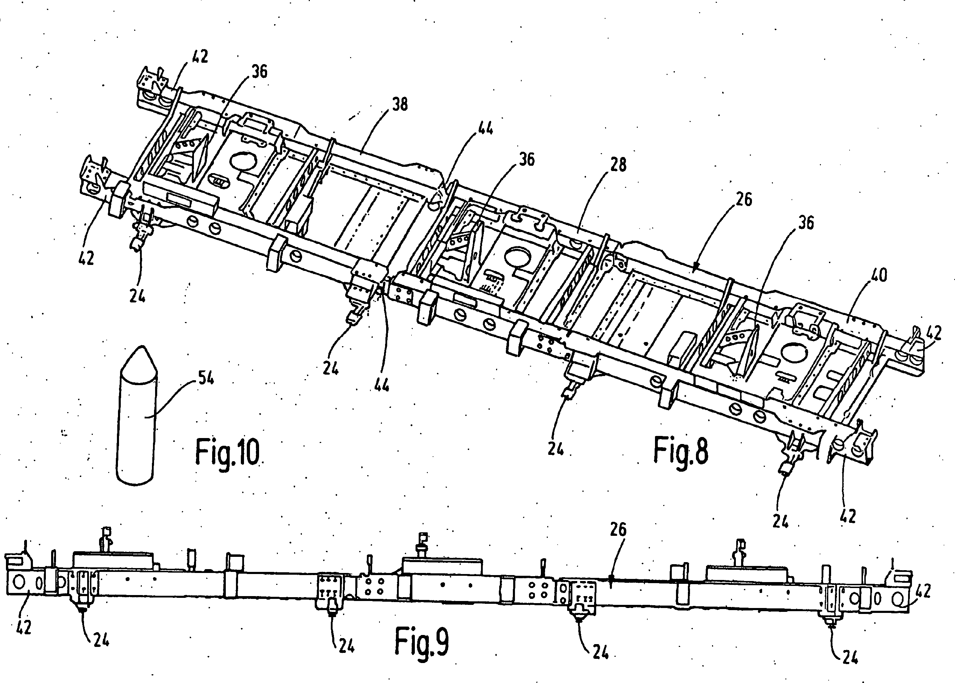

Die genannten Befestigungsschienen 14 weisen an ihrer dem jeweiligen Fluggastsitz 18 zugewandten Oberseite nicht dargestellte Durchtrittsöffnungen auf, die in einem vorgebbaren Rastermaß Abstände zueinander aufweisen, und die dem Durchgriff von Rastteilen eines Verriegelungskörpers 24 dienen, den man fachsprachlich auch mit Sitz-Fitting bezeichnet. Mittels einer nicht näher spezifizierten Exzenter- oder sonstigen Verriegelungseinrichtung lassen sich die dahingehenden Rastteile des Verriegelungskörpers 24 in der jeweils zuordenbaren Befestigungsschiene 14 festlegen. Dahingehende Sitzbefestigungsvorrichtungen sind beispielhaft in der nachveröffentlichten DE 10 2005 033 048 aufgezeigt, sowie in der DE 103 41 624 A1 der Anmelderin. Während bei diesen bekannten Lösungen nach dem genannten Stand der Technik die Unterseite der Ständerbeine des Stabtragwerkes 22 unmittelbar zum Festlegen des jeweiligen Sitzes paarweise in Längsrichtung einander gegenüberliegend, sowohl in Flugrichtung als auch entgegengesetzt, am Kabinenboden 10 lösbar festgelegt werden, geschieht dies bei der erfindungsgemäßen Lösung unter Zwischenschalten eines noch näher zu beschreibenden Strukturrahmens 26, der sowohl in der Fig. 1 als auch in den Fig. 8 und 9 funktionsmäßig vollständig dargestellt ist.

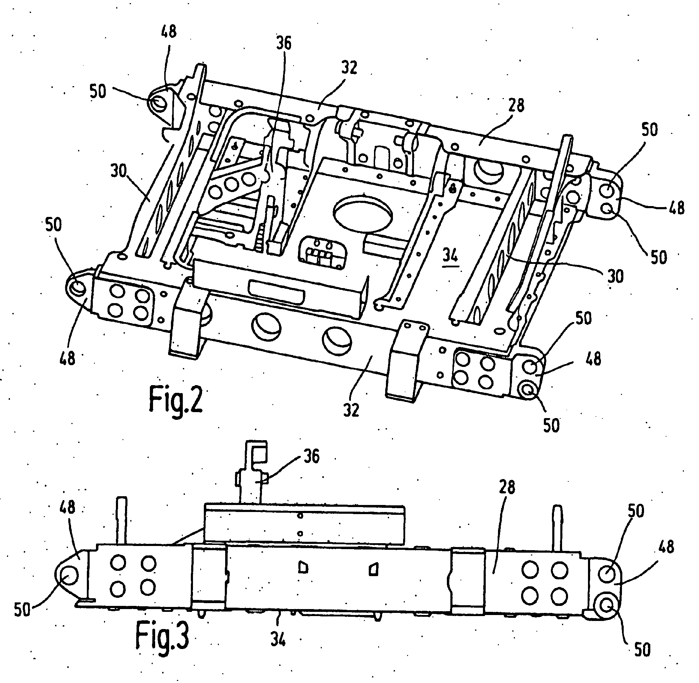

Der Strukturrahmen 26 ist in Modulbauweise konzipiert und setzt sich für die in der Fig. 1 gezeigte Dreiersitzreihe aus insgesamt drei Fluggastsitzen 18 zusammen. Dabei ist ein Grundrahmen 28 in den Fig. 2 und 3 gezeigt. Der Grundrahmen 28 ist in der Art eines Rechteckrahmens aufgebaut, bestehend aus zwei benachbart gegenüberliegenden Längsholmen 30 sowie Querholmen 32. Ferner ist der dahingehende kastenartige Rahmen bodenseitig über eine Abschlussplatte 34 ausgesteift. Das dahingehende mittlere Grundmodul ist in Leichtbauweise, vorzugsweise aus Aluminiumwerkstoff, gefertigt und weist demgemäß eine Vielzahl an Durchbrechungen und Eingriffslöchern auf, um so Gewicht zu sparen. Ferner trägt der Grundrahmen 28 an seiner Oberseite ein ausgesteiftes Teil 36.

Der insoweit erhaltene Grundrahmen 28 kann als sogenannter Strukturrahmen 26 für einen einzelnen Fluggastsitz 18 verwendet werden, d. h. der dahingehende Fluggastsitz (nicht dargestellt) lässt sich zusammen mit dem Grundrahmen 28 als Baueinheit handhaben, insbesondere dergestalt als Transporteinheit innerhalb der Kabine aufschlagen, aber auch wieder abtransportieren, was regelmäßig der Fall ist, wenn die Kabine nicht als Fluggastraum, sondern als Transportraum für Waren oder für Gepäckgut und dergleichen mehr zum Einsatz kommt. Über die dann freigelegten Befestigungsschienen 14 lassen sich zu Transportzwecken die dahingehenden Güter sinnfällig festzurren.

Neben der vereinfachten Handhabung eines dahingehend aufgebauten Sitzmoduls mit Grundrahmen 28, ist auch insoweit ein besonders verwindungssteifer Aufbau für das Ständerteil des Sitzteiles 20 in Form des Stabtragwerkes 22 gegeben. Aufgrund der Rahmenaussteifung an der Unterseite des Aufständerteils für den Sitz 18 ist insoweit auch ein besonders verwindungssteifer Aufbau für diesen erreicht und, etwaig in die Kabine eingeleitete Verwindungskräfte (Roll- und Pitch-Momente) lassen sich dergestalt wirksam aufnehmen und in ihrer schädigenden Wirkung begrenzen. Sollte der mittlere Grundrahmen 28 exemplarisch als Strukturrahmen ausgebildet am Kabinenboden 10 über Befestigungsschienen 14 festlegbar sein, ist dieser insoweit dann an seiner Unterseite gleichfalls mit den Fitting-Elementen zu versehen, was für den beschriebenen Gesamtstrukturrahmen gemäß dem aufgezeigten Ausführungsbeispiel nach der Fig. 1 nicht notwendig ist, da insoweit die sonstigen Grundrahmen die Festlegemöglichkeit gewährleisten.

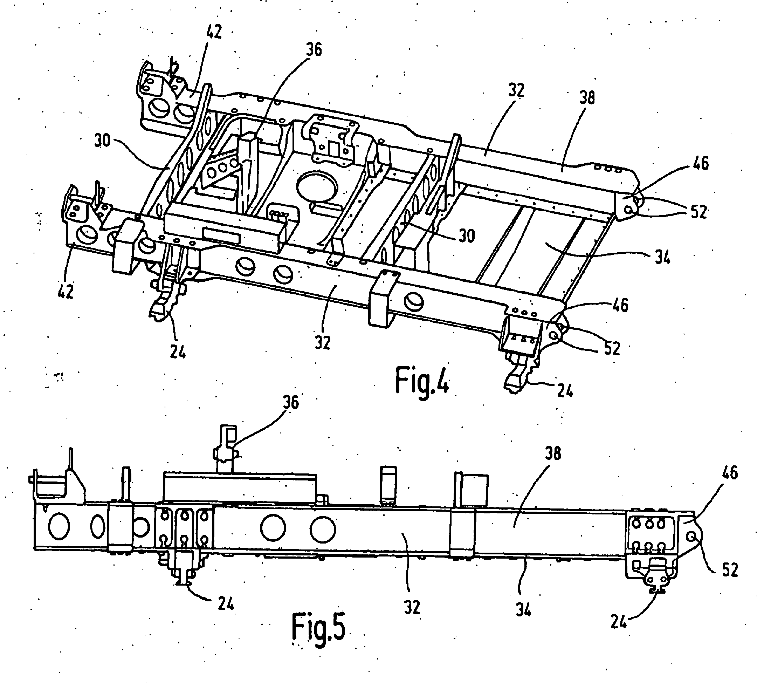

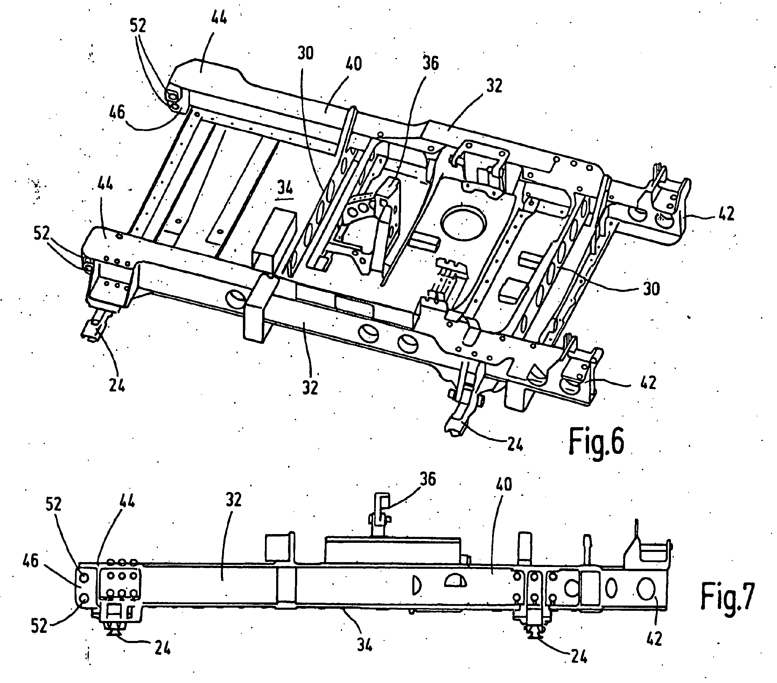

Neben dem mittleren Grundrahmen 28 schließen sich zum Herstellen der in Fig. 1 gezeigten Dreiergruppe für den Strukturrahmen 26 beidseitig ein linker und ein rechter Grundrahmen 38, 40 an, wobei sich die Angaben links und rechts auf die Betrachtungsrichtung der Figuren beziehen, und der linke Grundrahmen 38 ist in den Fig. 4 und 5 näher aufgezeigt, sowie der rechte Grundrahmen 40 in den Fig. 6 und 7. Auch die dahingehend weiteren Rahmen 38, 40 sind in Kastenbauweise konzipiert, bestehend aus Längs- und Querholmen 30 bzw. 32, wobei der jeweilige Boden wiederum über eine Abschlussplatte 34 ausgesteift ist. Auch verfügen die Grundrahmen 38 und 40 über ein nach oben stehendes Teil 36.

Wie weiter die Darstellung nach den Fig. 4 bis 7 zeigt, ist wiederum der eigentliche Grundrahmenaufbau für die Grundrahmen 38 und 40 wie für den mittleren Grundrahmen 28 nach den Fig. 2 und 3 vorgenommen; insoweit aber geändert, als in Richtung des mittleren Grundrahmens 28 der Grundrahmenaufbau von den Querholmen 32 her, stegartig nach außen hin verlängert ist. Die jeweils nach außen reichende stegartige Verlängerung 42 kann dabei als Festlegemittel dienen zum Anbringen einer nicht näher dargestellten Umhausung (Shell) für den jeweiligen Fluggastsitz 18 oder für mehrere dahingehend nebeneinander angeordneter Fluggastsitze. Die nach innen vorstehende stegartige Verlängerung 44 weist an ihrem freien Ende jeweils ein vorspringendes Anlageteil 46 auf, das mit zuordenbaren Anlageteilen 48 des mittleren Grundrahmens 28 beidseits verbindbar ist.

Der mittlere Grundrahmen nach den Fig. 2 und 3 weist, in Blickrichtung auf die Fig. gesehen, auf der linken Seite an seinem dortigen zuordenbaren Anlageteil 48 eine Durchgriffsöffnung 50 auf, und auf der rechten Seite sind in Übereinanderanordnung zwei Durchgriffsöffnungen 50 vorgesehen, wobei jede Durchgriffsöffnung 50 das zuordenbare Anlageteil 48 durchgreift, und die paarweise, jeweils einander gegenüberliegend angeordneten Durchgriffsöffnungen 50 fluchten miteinander in Richtung der Längsausrichtung der Längsholme 30. Die jeweiligen Anlageteile 46, 48 können einstückig Bestandteil der Querholme 32 sein; im vorliegenden Ausführungsbeispiel sind jedoch die Anlageteile 46, 48 als Winkelstücke nachträglich auf dem jeweiligen Grundrahmen 28 aufgesetzt mit diesem fest verbunden.

Die Anlageteile 46 von linkem und rechtem Grundrahmen 38 bzw. 40 können wie in der Fig. 4 exemplarisch dargestellt eine maulartige Umfassung bilden; aber auch wie für den rechten Grundrahmen 40 dargestellt, von einer ansatzweisen Verbreiterung des jeweils freien Endes des Querholmes 32 aufgenommen sein. Auch insoweit weisen die Anlageteile 46 Verbindungsöffnungen 52 auf, die endseitig jeweils zur Erzeugung des Gesamtstrukturrahmens 26 in Deckung bringbar sind mit den zuordenbaren Durchgriffsöffnungen 50 der weiteren Anlageteile 48. Der dahingehend zusammengesetzte Grundaufbau für den Strukturrahmen 26 ist in den Fig. 8 und 9 aufgezeigt.

Als Verbindungsteil 54 zum Verbinden der Anlageteile 46, 48 miteinander und mithin zum Verbinden der verschiedenen Grundrahmen miteinander, dient ein Verriegelungsbolzen gemäß der Darstellung nach der Fig. 10. Das dahingehende Verbindungsteil 54 ist an seinem einen freien Ende mit einem konisch zulaufenden Ende versehen, um dergestalt das Einführen des Verbindungsbolzens in die zuordenbaren Öffnungen 50, 52 zu erleichtern. Wie man insbesondere aus den Fig. 2 und 3 ersehen kann, besteht auf der rechten Seite des Grundrahmens 28 die Möglichkeit, in Übereinanderanordnung jeweils zwei Verbindungsteile 54 in die Anlageteile 46 über die fluchtenden Durchgriffsöffnungen 50, 52 an jedem Querholm 32 einzubringen, wobei auf der gegenüberliegenden Seite des Grundrahmens 28 dann nur eine derartige Durchgriffsmöglichkeit für den Verbindungsbolzen besteht. Werden zwei Verbindungsbolzen in Übereinanderanordnung in jedes zuordenbare Anlageteil 46, 48 eingebracht, sind die beiden Grundrahmen 28 und 40 (rechter Grundrahmen), fest miteinander verbunden und können dergestalt dem Transport zweier benachbarter Flug- _ gastsitze 18 dienen.

Die dahingehende Doppelsitzbestuhlung lässt sich sehr gut mittels nicht näher dargestellter Handhabungsgeräte in die Flugzeugkabine ein- und ausbringen. Wird dann zunächst für einen Bestuhlungsvorgang der linke Grundrahmen 38 nebst zugehörigem Sitz 18 eingesetzt, kommt dann anschließend in der Art einer Doppelpalette die weiteren Komponente der Dreiersitzreihe nach in Form zweier miteinander verbundener Sitze 18. Wird nun an einer Gelenkstelle zwischen dem Grundrahmen 28 und dem rechten Grundrahmen 40 aus jedem der Anlageteile 46, 48 ein Bolzenpaar als Verbindungsteil 54 entnommen, bleibt insoweit nur ein Bolzenpaar zurück und das frei gewordene Bolzenpaar kann dann über die korrespondierenden Öffnungen 50, 52 der Verbindung zwischen dem linken Grundrahmen 38 und dem mittleren Grundrahmen 28 dienen. Das Bolzenpaar, welches aus der Gelenkstelle zwischen dem Grundrahmen 28 und dem Grundrahmen 40 aus den Anlageteilen 46, 48 entnommen wird, besteht aus dem vorderen und hinteren Bolzen und wird insoweit entweder nur als unteres oder nur als oberes Bolzenpaar entnommen, um den Freiheitsgrad der Rotation im aufgezeigten Sinn nicht zu verlieren. In die Aufnahmen eingesteckte Bolzen sollten dann gegenüberliegend in einer horizontalen Ebene angeordnet sein, um die aufgezeigte Rotation zu ermöglichen.

Die Ein-Paar-Bolzenverbindung auf beiden Seiten des Grundrahmens 28 ist beispielhaft in den Figuren 8 und 9 wiedergegeben. Da das jeweilige Verriegelungsteil 54 in Form des Verbindungsbolzens eine Art Gelenkstelle ausbildet mit einem möglichen Freiheitsgrad parallel zur Längsachse des Kabinenbodens 10 oder zur Flugzeuglängsachse 12, ist insoweit eine freie Neigungseinstellung der Grundrahmen 28, 38 und 40 parallel zu deren Längsholmen 30 möglich. Verwindet sich nun die Flugzeugkabine, und mithin der Kabinenboden 10, können insoweit die Grundrahmen der jeweiligen Torsionsbewegung (Pitch und Roll) nachfolgen, und dennoch gleichzeitig die Kabine weiter Mitaussteifen sowie zur Stabilitätserhöhung der Aufständerung des jeweiligen Fluggastsitzes mit beitragen. Eine axiale Bewegung des Verbindungsteiles 54 in Richtung der Flugzeuglängsachse 12 wird aber durch an sich bekannte und nicht näher dargestellte Sicherungsmittel, die am Verbindungsbolzen angreifen, unterbunden. Mit dem erfindungsgemäßen Sitzrahmenkonzept ist es möglich, auch erhöhten Zulassungsvoraussetzungen gerecht zu werden. So sieht der neuere sog. 16g-Forward-Test vor, den Sitz um 10° aus der Flugrichtung seitwärts zu versetzen, wobei anschließend ein Sitzfuß mit vorderem und hinterem Sitzfitting um 10° "gerollt" und danach der nächstgelegene Sitzfuß um den hinteren Sitzfitting um 10° nach unten "gepitcht" wird, so dass eine dreidimensionale Verwindung des Gesamtsitzes entsteht, welches durch das erfindungsgemäße Grundrahmenkonzept, insbesondere bestehend aus drei Einzelgrundrahmen, sicher aufgenommen werden kann.

Ein Ausbau der Bestuhlung geht dann in umgekehrter Reihenfolge vor sich und der jeweils aus den Aufnahmen entfernte Verbindungsbolzen zwischen linkem Grundrahmen 38 und mittleren Grundrahmen 28 kann in die dann frei gelassene Öffnung 50, 52 zwischen rechtem Grundrahmen 40 und mitt lerem Grundrahmen 28 zur Arretierung der dahingehenden Rahmen erneut eingebracht werden. Um zu vermeiden, dass in der Beweglichkeitsstellung die dahingehenden Verbindungsteile 54 gegebenenfalls versetzt zueinander an dieser Stelle eingebracht werden, helfen farbliche Markierungen (nicht dargestellt) an den jeweiligen Anlageteilen 46, 48 einer dahingehenden Fehlbedienung entgegenzuwirken. Eine Sicherung des bolzenartigen Verbindungsteiles 54 über Gliederketten oder sonstige linienförmige Sicherungselemente scheidet schon bereits aufgrund von möglichen Klappergeräuschen aus und im Übrigen muss in jedem Fall sichergestellt werden, dass nicht lose Teile in die Betätigungsmechanik für den Sitz 18 gelangen können.

Die beschriebene Verbindungsmimik kann auch zwischen zwei einzelnen Grundrahmen dergestalt vorgenommen sein; ebenso lassen sich dergestalt paarweise zwei Grundstrukturrahmen zur Bildung von Vierersitzreihen miteinander verbinden. Aufgrund der aufgezeigten Anordnung nach den Fig. 1 bis 10 ist es darüber hinaus möglich, für den mittleren Grundrahmen 28 keine Fittings vorzusehen, da insoweit die randseitig angeordneten Sitzbefestigungsvorrichtungen 24 für den linken und rechten Grundrahmen 38 bzw. 40 die Festlegung am Kabinenboden 10 über die Befestigungsschienen 14 ermöglichen. Anstelle des Verbindungsbolzens könnten auch andere, nicht näher dargestellte, Verbindungsteile treten, die dann gegebenenfalls als Mehrgelenk ausgebildet auch mehr als nur einen Bewegungsfreiheitsgrad für die Rahmen zulassen.

## Patentansprüche

1. Strukturrahmen zum Aufständern von Sitzen auf einem Kabinenboden (10) und/oder zum Transport dahingehender Sitze in und aus einer Kabine, mit einem ersten Grundrahmen (28), welcher einem ersten Sitz (18) zugeordnet ist, und zumindest einem zweiten Grundrahmen (38, 40), welcher einem zweiten Sitz (18) zugeordnet ist, **gekennzeichnet durch** ein Verbindungsteil (54) zum Verbinden der Grundrahmen (28, 38, 40) miteinander, das eine Gelenkstelle ausbildet.

2. Strukturrahmen nach Anspruch 1, **dadurch gekennzeichnet, dass** zur Bildung einer Sitzreihe der erste Grundrahmen (28) mit mindestens dem benachbart angeordneten zweiten Grundrahmen (38, 40) über eine Verbindungsstelle lösbar verbunden ist.

3. Strukturrahmen nach Anspruch 1 oder 2, **dadurch gekennzeichnet, dass** die Gelenkstelle eine Relativbewegung der benachbart miteinander verbundenen Grundrahmen (28, 38, 40) in mindestens einer Richtung erlaubt, wobei die Relativbewegung aus einer Schwenkbewegung in Richtung um eine gemeinsame Verbindungsachse der Grundrahmen (28, 3 8, 40) besteht.

4. Strukturrahmen nach einem der vorhergehenden Ansprüche, **dadurch gekennzeichnet, dass** mittels einer Arretiereinrichtung zumindest teilweise die jeweilige Gelenkstelle blockierbar ist.

5. Strukturrahmen nach einem der vorhergehenden Ansprüche, **dadurch gekennzeichnet, dass** die Grundrahmen (28, 38, 40) in der Art eines Rechtecks aus paarweise gegenüberliegenden Längs- und Querholmen (30, 32) aufgebaut sind und dass jeder Querholm (32) mit einem Querholm (32) eines benachbarten Grundrahmens die mögliche Gelenkstelle bildet.

6. Strukturrahmcn nach einem der vorhergehenden Ansprüche, **dadurch gekennzeichnet, dass** zumindest ein Teil der Grundrahmen (28, 38, 40) über Befestigungsmittel (24) mit im oder auf dem Kabinenboden (10) verlaufenden Längsschienen (14) verbindbar sind.

7. Strukturrahmen zumindest nach Anspruch 3, **dadurch gekennzeichnet, dass** das Verbindungsteil (54) für die Schwenkbewegung entlang der jeweiligen Verbindungsachse vorgesehen ist.

8. Strukturrahmen nach Anspruch 7, **dadurch gekennzeichnet, dass** zumindest ein Teil der aus einer zuordenbaren Verbindungsstelle entfernbaren Verbindungsteile (54) an anderer Stelle als Arretiereinrichtung ein Verriegeln benachbarter Grundrahmen (28, 3 8; 28, 40) ermöglicht.

9. Strukturrahmen nach Anspruch 7 oder 8, **dadurch gekennzeichnet, dass** das jeweilige Verbindungsteil (54) aus einem Verbindungsbolzen gebildet ist, der in zwei deckungsgleich hintereinander angeordneten Öffnungen (50, 52) zweier benachbarter Grundrahmen (28, 38; 28, 40) reversibel einschiebbar ist.

10. Sitzreihe mit zumindest zwei Sitzen (18) und einem Strukturrahmen nach einem der vorhergehenden Ansprüche, wobei die Sitze (18) jeweils einem der Grundrahmen (28, 38, 40) zugeordnet sind, die Sitze (18) jeweils ein Sitzteil (20) und ein Aufständerteil aufweisen, das zum Aufständern des zuordenbaren Sitzteiles (20) dient, und wobei die Grundrahmen (28, 38, 40) jeweils als Rahmenaussteifung an der Unterseite des zuordenbaren Aufständerteils für den entsprechenden Sitz (18) dienen.

11. Sitzreihe mit zumindest zwei Sitzen (18) und einem Strukturrahmen nach einem der Ansprüche 1 bis 9, wobei die Sitze (18) jeweils einem der Grundrahmen (28, 38, 40) zugeordnet sind und mindestens einer der Sitze (18) zusammen mit dem zuordenbaren Grundrahmen (28) eine Baueinheit bildet, die sich als Transporteinheit handhaben lässt.

12. Sitzreihe mit zumindest zwei Sitzen (18) und einem Strukturrahmen zumindest nach Anspruch 4, wobei zumindest zwei Grundrahmen (28, 40) in einer arretierten Grundstellung zusammen mit den zuordenbaren Sitzen (18) eine Transporteinheit bilden, die sich zu Transportzwecken handhaben lässt.

13. Verfahren mit einem Strukturrahmen, der mit einem ersten Grundrahmen (28), welcher einem ersten Sitz (18) zugeordnet ist, mit zumindest einem zweiten Grundrahmen (40), welcher einem zweiten Sitz (18) zugeordnet ist, mit einem Verbindungsteil (54) zum Verbinden der Grundrahmen (28, 38, 40) miteinatlder, das eine Gelenkstelle ausbildet, und mit einer Arretiereinrichtung versehen ist, mittels welcher zumindest teilweise die Gelenkstelle blockierbar ist, umfassend die Schritte:
- Handhabung einer Transporteinheit, die von den Grundrahmen (28, 40) in einer arretierten Grundstellung zusammen mit den zuordenbaren Sitzen (18) gebildet ist und
- Lösen der Arretierung in einer aufgerüsteten Benutzungssituation, um einen gewünschten Freiheitsgrad herzustellen, durch welchen die Gelenkstelle eine Relativbewegung der benachbart miteinander verbundenen Grundrahmen (28, 40) in mindestens einer Richtung erlaubt.

## Claims

1. Frame structure for erecting seats on a cabin floor (10) and/or for transport of the seats to this effect into and out of a cabin, with a first base frame (28) which is assigned to a first seat (18), and with at least one second base frame (38, 40) which is assigned to a second seat (18), **characterized by** a connecting part (54) for connecting the base frames (28, 38, 40) to one another, the connecting part forming an articulation.

2. Frame structure according to Claim 1, **characterized in that**, in order to form a row of seats, the first base frame (28) is connected detachably to at least the adjacent, second base frame (38, 40) via a connecting point.

3. Frame structure according to Claim 1 or 2, **characterized in that** the articulation permits a relative motion of the adjacently connected base frames (28, 38, 40) in at least one direction, the relative motion consisting of a pivoting motion in a direction about a common connecting axis of the base frames (28, 38, 40).

4. Frame structure according to one of the preceding claims, **characterized in that** the respective articulation can be at least partially locked by a locking device.

5. Frame structure according to one of the preceding claims, **characterized in that** the base frames (28, 38, 40) are constructed in the manner of a rectangle from longitudinal and cross members (30, 32) lying opposite to one another in pairs, and wherein each cross member (32) forms the possible articulation with a cross member (32) of an adjacent base frame.

6. Frame structure according to one of the preceding claims, **characterized in that** at least one part of the base frames (28, 38, 40) can be connected via fasteners (24) to longitudinal rails (14) running in or on the cabin floor (10).

7. Frame structure at least according to Claim 3, **characterized in that** the connecting part (54) is provided for the pivoting motion about the respective articulation axis.

8. Frame structure according to Claim 7, **characterized in that** at least one of the connecting parts (54) which can be removed from an assignable connecting point enables, as a locking device at a different point, a locking of adjacent base frames (28, 38; 28, 40).

9. Frame structure according to Claim 7 or 8, **characterized in that** the respective connecting part (54) is formed from a connecting bolt which can be reversibly inserted into two openings (50, 52) of two adjacent base frames (28, 38; 28, 40), wherein the openings are arranged congruently one behind the other.

10. Row of seats with at least two seats (18) and a frame structure according to one of the preceding claims, wherein the seats (18) are each assigned to one of the base frames (28, 38, 40), the seats (18) each have a seat part (20) and a seat structure part used for erecting the assignable seat part (20), and wherein the base frames (28, 38, 40) are each used as a frame-stiffening means on the underside of the assignable seat structure part for the corresponding seat (18).

11. Row of seats with at least two seats (18) and a frame structure according to one of Claims 1 to 9, wherein the seats (18) are each assigned to one of the base frames (28, 38, 40), and at least one of the seats (18) together with the assignable base frame (28) forms a constructional unit which can be handled as a transport unit.

12. Row of seats with at least two seats (18) and a frame structure at least according to Claim 4, wherein at least two base frames (28, 40) in a locked basic position together with the assignable seats (18) form a transport unit which can be handled for transport purposes.

13. Method with a frame structure which is provided with a first base frame (28) which is assigned to a first seat (18), with at least a second base frame (40) which is assigned to a second seat (18), with a connecting part (54) for connecting the base frames (28, 38, 40) to one another, said connecting part forming an articulation, and with a locking device by means of which the articulation can be at least partially locked, comprising the following steps:
- handling a transport unit which is formed by the base frames (28, 40) in a locked basic position together with the assignable seats (18), and
- releasing the lock in an erected use position in order to produce a desired degree of freedom by means of which the articulation permits a relative motion of the adjacently connected base frames (28, 40) in at least one direction.

## Revendications

1. Cadre structurel pour ériger des sièges sur un sol de cabine (10) et/ou pour le transport de ces sièges dans et hors d'une cabine, comprenant un premier cadre de base (28), qui est associé à un premier siège (18), et au moins un deuxième cadre de base (38, 40) qui est associé à un deuxième siège (18), **caractérisé par** une pièce de connexion (54) pour connecter les cadres de base (28, 38, 40) les uns aux autres, laquelle constitue une articulation.

2. Cadre structurel selon la revendication 1, **caractérisé en ce que** pour la formation d'une rangée de sièges, le premier cadre de base (28) est connecté de manière amovible à au moins le deuxième cadre de base adjacent (38, 40) par le biais d'un point de connexion.

3. Cadre structurel selon la revendication 1 ou 2, **caractérisé en ce que** l'articulation permet un mouvement relatif des cadres de base adjacents connectés les uns aux autres (28, 38, 40) dans au moins une direction, le mouvement relatif se produisant à partir d'un mouvement de pivotement dans le sens d'une rotation autour d'un axe de connexion commun des cadres de base (28, 38, 40).

4. Cadre structurel selon l'une quelconque des revendications précédentes, **caractérisé en ce que** l'articulation respectif peut être bloqué au moins en partie au moyen d'un dispositif d'arrêt.

5. Cadre structurel selon l'une quelconque des revendications précédentes, **caractérisé en ce que** les cadres de base (28, 38, 40) sont construits à la manière d'un rectangle constitué de longerons et de traverses (30, 32) opposés par paire, et **en ce que** chaque traverse (32) forme avec une traverse (32) d'un cadre de base adjacent, le point d'articulation possible.

6. Cadre structurel selon l'une quelconque des revendications précédentes, **caractérisé en ce qu'**au moins une partie des cadres de base (28, 38, 40) peuvent être connectés par le biais de moyens de fixation (24) à des rails longitudinaux (14) s'étendant dans ou sur le sol de la cabine (10).

7. Cadre structurel selon au moins la revendication 3, **caractérisé en ce que** la pièce de connexion (54) est prévue pour le mouvement de pivotement autour de l'axe d'articulation respectif.

8. Cadre structurel selon la revendication 7, **caractérisé en ce qu'**au moins une partie des pièces de connexion (54) pouvant être enlevées d'un point de connexion associé, permet, à un autre endroit, un verrouillage de cadres de base adjacents (28, 38 ; 28, 40) sous forme de dispositif d'arrêt.

9. Cadre structurel selon la revendication 7 ou 8, **caractérisé en ce que** la partie de connexion respective (54) est formée d'un boulon de connexion, qui peut être inséré de manière réversible dans deux ouvertures (50, 52) disposées en coïncidence l'une derrière l'autre de deux cadres de base adjacents (28, 38 ; 28, 40).

10. Rangée de sièges comprenant au moins deux sièges (18) et un cadre structurel selon l'une quelconque des revendications précédentes, dans laquelle les sièges (18) sont associés à chaque fois à l'un des cadres de base (28, 38, 40), les sièges (18) présentent à chaque fois une partie de siège (20) et une partie de support, qui sert à ériger la partie de siège associée (20), et les cadres de base (28, 38, 40) servant à chaque fois de renforcement de cadre au niveau du côté inférieur de la partie de support associée pour le siège correspondant (18).

11. Rangée de sièges comprenant au moins deux sièges (18) et un cadre structurel selon l'une quelconque des revendications 1 à 9, les sièges (18) étant à chaque fois associés à l'un des cadres de base (28, 38, 40), et au moins l'un des sièges (18) formant une unité constructive avec le cadre de base associé (28), laquelle unité constructive peut être manipulée sous forme d'unité de transport.

12. Rangée de sièges comprenant au moins deux sièges (18) et un cadre structurel selon au moins la revendication 4, dans laquelle au moins deux cadres de base (28, 40) forment, conjointement avec les sièges associés (18), une unité de transport dans une position de base bloquée, laquelle unité de transport peut être manipulée à des fin de transport.

13. Procédé avec un cadre structurel, qui est pourvu d'un premier cadre de base (28), qui est associé à un premier siège (18), d'au moins un deuxième cadre de base (40), qui est associé à un deuxième siège (18), d'une pièce de connexion (54) pour connecter les cadres de base (28, 38, 40) les uns aux autres, qui constitue une articulation, et d'un dispositif d'arrêt, au moyen duquel le point d'articulation peut être au moins en partie bloqué, comprenant les étapes suivantes :
- manipulation d'une unité de transport qui est formée par les cadres de base (28, 40) conjointement avec les sièges associés (18) dans une position de base bloquée et
- desserrage du blocage dans une situation d'utilisation équipée, afin de créer un degré de liberté souhaité, au moyen duquel l'articulation permet un mouvement relatif des cadres de base adjacents connectés les uns aux autres (28, 40) dans au moins une direction.
